# EUROPEAN PATENT APPLICATION

(11) **EP 4 647 736 A1**
(43) Date of publication of application: **12.11.2025**
(21) Application number: 24875767.6
(22) Date of filing: 11.06.2024

(54) **HELIUM LEAK DETECTION SYSTEM AND METHOD**

(30) Priority: 05.03.2024 CN 202410246365
(71) Applicant: Contemporary Amperex Technology Co., Limited, Ningde, Fujian 352100 (CN)
(72) Inventor: MA, Shiwu, Ningde, Fujian 352100 (CN); WANG, Hongda, Ningde, Fujian 352100 (CN); FAN, Xiang, Ningde, Fujian 352100 (CN)
(74) Representative: Ran, Handong
(86) International application number: PCT/CN2024/098499
(87) International publication number: WO 2025/185002

(57) **Abstract**

The present application discloses a helium detection system and method. A control device controls a loading manipulator to transfer a battery cell to a first main detection chamber and open a corresponding first vacuum valve, evacuates the first main detection chamber through a first vacuum pump, closes the first vacuum valve after the evacuation is completed, and performs major leak detection on the battery cell through a first negative pressure gauge; in a case where the major leak detection is passed, controls a second vacuum valve to open, to start a second vacuum pump to evacuate the battery cell, and after the evacuation, controls a first helium injection valve of a helium pipeline to open, to inject helium into the battery cell, and closes the first helium injection valve after the helium injection is completed, and performs helium detection on the battery cell through a first helium detector, thereby completing the main detection for the battery cell; whereas in a case where the major leak detection is failed, opens a vacuum breaking valve, and breaks the vacuum of the battery cell and the first main detection chamber through an atmospheric pipeline; and controls an unloading manipulator to transfer the battery cell to a re-detection chamber for re-detection, thereby capable of improving the utilization rate of vacuum resources and helium resources and improving the detection efficiency.

## Description

### CROSS-REFERENCE TO RELATED APPLICATION

The present application is filed based on and claims priority to Chinese patent application No. 202410246365.6, filed on March 5, 2024 and entitled "HELIUM DETECTION SYSTEM AND METHOD", which is incorporated herein by reference in its entirety.

### TECHNICAL FIELD

The present application relates to the technical field of batteries, and more particularly to a helium detection system and method.

### BACKGROUND

Helium detection is a necessary step in the lithium battery production process. By measuring the helium content inside the battery, it is possible to determine whether the battery is leaking, discover potential hazards in the battery in a timely manner, prevent safety accidents such as battery explosions, and effectively test battery safety. However, in the current helium detection process, there is still a waste of vacuum and helium resources, which leads to the problem of low detection efficiency.

### SUMMARY OF THE INVENTION

Embodiments of the present application provide a helium detection system and method, which can improve the utilization rate of vacuum and helium resources, thereby improving the detection efficiency.

Technical solutions of the embodiments of the present application are implemented as follows:
in a first aspect, an embodiment of the present application provides a helium detection system, including a control device, a loading manipulator, a main detection chamber, a first vacuum pump, a first vacuum valve, a second vacuum pump, a second vacuum valve, a first negative pressure gauge, a helium pipeline, a first helium injection valve, a first helium detector, an unloading manipulator, and a re-detection chamber;
the control device is configured to control the loading manipulator to transfer a battery cell to the first main detection chamber, and control the first vacuum valve corresponding to the first main detection chamber to open, and evacuate the first main detection chamber through the first vacuum pump; and in a case where the evacuation of the first main detection chamber is completed, close the first vacuum valve, and perform major leak detection on the battery cell through the first negative pressure gauge; and in a case where a detection result of the major leak detection is detection passed, control the second vacuum valve to open, and evacuate the battery cell through the second vacuum pump; and in a case where the evacuation of the battery cell is completed, control the first helium injection valve of the helium pipeline to open, to inject helium into the battery cell; and in a case where the helium injection is completed, close the first helium injection valve, and perform helium detection on the battery cell through the first helium detector, thereby completing a main detection operation on the battery cell;
the control device is further configured to, in a case where the detection result of the major leak detection is detection failed, control a vacuum breaking valve to open, and break the vacuum of the battery cell and the first main detection chamber through an atmospheric pipeline; and control the unloading manipulator to transfer the battery cell to the re-detection chamber for re-detection; where the re-detection includes re-detection for the major leak detection and re-detection for the helium detection;
where the first main detection chamber is any idle chamber among multiple main detection chambers; the first vacuum valve is connected to the first vacuum pump; and the second vacuum valve is connected to the second vacuum pump.

In this embodiment, the control device can control the loading manipulator to transfer the battery cell to any idle first main detection chamber among the multiple main detection chambers, and then open the first vacuum valve connected to the first vacuum pump, so that the first main detection chamber can be evacuated using the first vacuum pump, and after the evacuation is completed, close the first vacuum valve, and perform major leak detection on the battery cell, which can effectively reduce the waste of vacuum resources and improve the efficiency of the major leak detection. Then, in a case where the major leak detection is passed, the control device can continue to control the second vacuum valve to open, and evacuate the battery cell using the second vacuum pump, and then control the first helium injection valve of the helium pipeline to open, to inject helium into the battery cell to complete the helium detection, and close the first helium injection valve; and if the major leak detection is failed, control the vacuum breaking valve to open, so as to, after the vacuum breaking is completed for the battery cell and the first main detection chamber, control the unloading manipulator to remove the battery cell from the first main detection chamber and transfer it to the re-detection chamber for re-detection, which can effectively reduce the waste of vacuum and helium resources during the helium detection process and improve the helium detection efficiency. It can be seen that the present application can improve the utilization rate of the vacuum and helium resources in the main detection procedure and effectively improve the detection efficiency of the major leak detection and the helium detection for battery cells by controlling and scheduling the action execution by related devices in the major leak process and the helium detection process in the main detection procedure.

In some embodiments of the present application, the helium detection system further includes a host computer and a helium detection valve, and the helium detection valve is connected to the first helium detector.

The control device is further configured to control the helium detection valve corresponding to the first helium detector to open, and send a helium detection request to the host computer.

The host computer is configured to send a helium detection instruction to the control device in response to the helium detection request.

The control device is further configured to control the first helium detector to perform the helium detection on the battery cell in response to the helium detection instruction; and in a case where the helium detection is completed, close the helium detection valve.

In this embodiment, when controlling the performance of the helium detection on the battery cell, the control device can first open the helium detection valve corresponding to the first helium detector and send a helium detection request to the host computer. Then, upon receiving the helium detection instruction feedback from the host computer, the control device can control the first helium detector to perform the helium detection on the battery cell, and in a case where the helium detection is completed, close the helium detection valve, thereby improving the helium detection efficiency.

In some embodiments of the present application, the helium detection system further includes a main valve.

The control device is further configured to control the second vacuum valve and the main valve to open, to start the second vacuum pump to evacuate the battery cell; and in a case where the evacuation of the battery cell is completed, close the second vacuum valve.

The control device is further configured to, in a case where the first helium injection valve is closed, close the main valve.

In this embodiment, the control device can start the second vacuum pump by opening the second vacuum valve and the main valve to perform an evacuation operation on the battery cell, and in a case where the helium injection operation on the battery cell is completed, close the first helium injection valve and the main valve, so that the relevant operations in the battery cell evacuation and helium injection operation processes can be reasonably planned, thereby improving the operational efficiency of the battery cell evacuation and helium injection.

In some embodiments of the present application, the helium detection system further includes an atmospheric pipeline and a vacuum breaking valve connected to the atmospheric pipeline.

The control device is further configured to control the second vacuum valve and the main valve to open, and extract the helium from the battery cell using the second vacuum pump; and in a case where the helium clearing in the battery cell is completed, close the second vacuum valve; and control the vacuum breaking valve to open, and break the vacuum of the battery cell and the first main detection chamber through the atmospheric pipeline.

In this embodiment, the control device can open the second vacuum valve and the main valve, so as to extract the helium in the battery cell using the second vacuum pump, and after the helium is cleared, close the second vacuum valve, and open the vacuum breaking valve connected to the atmosphere pipeline, so as to break the vacuum environment of the battery cell and the first main detection chamber, thereby improving the performance efficiency of helium clearing and vacuum breaking.

In some embodiments of the present application, the helium detection system further includes a re-detection manipulator, a first buffer position, and a first unloading pull belt.

The control device is further configured to, in a case where a re-detection result for the battery cell is re-detection passed, control the re-detection manipulator to transfer the battery cell from the re-detection chamber to the first buffer position; and control the unloading manipulator to transfer the battery cell from the first buffer position to the first unloading pull belt for unloading.

In this embodiment, the control device can control the re-detection manipulator to transfer the battery cell that has passed the re-detection to the first unloading pull belt, so as to unload the battery cell that has passed the re-detection.

In some embodiments of the present application, the helium detection system further includes an unloading position.

The control device is further configured to, in a case where a detection result of the helium detection is detection passed, transfer the battery cell from the first main detection chamber to the unloading position, and control the unloading manipulator to transfer the battery cell on the unloading position to the first unloading pull belt for unloading; and in a case where the detection result of the helium detection is detection failed, control the unloading manipulator to transfer the battery cell from the first main detection chamber to the re-detection chamber for re-detection.

In this embodiment, in a case where the battery cell has passed the major leak detection and helium detection of the main detection, the control device can transfer the battery cell from the first main detection chamber to the unloading position, and then transfer the battery cell on the unloading position to the first unloading pull belt through the unloading manipulator to complete the unloading; in addition, in a case where the battery cell has passed the major leak detection but failed the helium detection, the control device can transfer the battery cell that has failed the helium detection from the first main detection chamber to the re-detection chamber for re-detection, thereby achieving more comprehensive helium detection for the battery cell.

In some embodiments of the present application, the helium detection system further includes a second unloading pull belt.

The control device is further configured to, in a case where the re-detection result of the battery cell is re-detection failed, control the re-detection manipulator to transfer the battery cell from the re-detection chamber to the second unloading pull belt for unloading.

In this embodiment, the control device can also transfer the battery cell that has failed the re-detection to the second unloading pull belt, so as to unload the battery cell that has failed the re-detection through the second unloading pull belt.

In some embodiments of the present application, the helium detection system further includes a detection device and a loading pull belt; and the main detection chamber includes an upper chamber and a lower chamber.

The control device is further configured to, upon receiving a Hipot test passed message sent by the detection device, control the loading manipulator to transfer the battery cell on the loading pull belt to the lower chamber of the first main detection chamber, and combine the upper chamber and the lower chamber of the first main detection chamber; and in a case where the combination of the chambers is completed, control the first vacuum valve to open, to complete the evacuation operation on the first main detection chamber.

In this embodiment, the control device can, in response to the Hipot test passed message sent by the detection device, control the loading manipulator to transfer the battery cell that has passed the Hipot test on the loading pull belt to the lower chamber of the first main detection chamber, and then combine the lower chamber and the upper chamber of the first main detection chamber, and then after the chambers are combined, perform the evacuation operation to complete the main detection procedure, which can improve the reliability of the main detection.

In some embodiments of the present application, the helium detection system further includes a third unloading pull belt.

The control device is further configured to, upon receiving a Hipot test failed message sent by the detection device, control the loading manipulator to transfer the battery cell on the loading pull belt to the third unloading pull belt for unloading.

In this embodiment, the control device can further control the loading manipulator to transfer the battery cell that has failed the Hipot test on the loading pull belt to the third unloading pull belt, so as to unload the battery cell that has failed the Hipot test.

In some embodiments of the present application, the control device is further configured to, in a case where the number of battery cells in the first main detection chamber reaches a first number, control the first vacuum valve to open, thereby completing the main detection operation on the first number of battery cells.

In this embodiment, the control device can control the loading manipulator to transfer the first number of battery cells from the loading pull belt to the first main detection chamber. When the control device determines that the number of battery cells in the first main detection chamber reaches the first number, it can open the first vacuum valve, to complete the main detection operation on the first number of battery cells in the first main detection chamber, thereby improving the detection efficiency.

In a second aspect, an embodiment of the present application provides a helium detection method applied to a helium detection system, the method including:
a control device controlling a loading manipulator to transfer a battery cell to a first main detection chamber, and controlling a first vacuum valve corresponding to the first main detection chamber to open, and evacuating the first main detection chamber through a first vacuum pump; where the first main detection chamber is any idle chamber among multiple main detection chambers; and the first vacuum valve is connected to the first vacuum pump;
in a case where the evacuation of the first main detection chamber is completed, the control device closing the first vacuum valve, and performing major leak detection on the battery cell through a first negative pressure gauge;
in a case where a detection result of the major leak detection is detection passed, the control device controlling a second vacuum valve to open, to start a second vacuum pump to evacuate the battery cell; where the second vacuum valve is connected to the second vacuum pump;
in a case where the evacuation of the battery cell is completed, the control device controlling a first helium injection valve of a helium pipeline to open, to inject helium into the battery cell;
in a case where the helium injection is completed, the control device closing the first helium injection valve, and performing helium detection on the battery cell through the first helium detector, thereby completing a main detection operation on the battery cell;
in a case where the detection result of the major leak detection is detection failed, the control device controlling a vacuum breaking valve corresponding to an atmospheric pipeline to open, and breaking the vacuum of the battery cell and the first main detection chamber through the atmospheric pipeline; and
the control device controlling an unloading manipulator to transfer the battery cell to a re-detection chamber for re-detection; where the re-detection includes re-detection for the major leak detection and re-detection for the helium detection.

In this embodiment, the control device can control the loading manipulator to transfer the battery cell to any idle first main detection chamber among the multiple main detection chambers, and then open the first vacuum valve connected to the first vacuum pump, so that the first main detection chamber can be evacuated using the first vacuum pump, and after the evacuation is completed, close the first vacuum valve, and perform major leak detection on the battery cell, which can effectively reduce the waste of vacuum resources and improve the efficiency of the major leak detection. Then, in a case where the major leak detection is passed, the control device can continue to control the second vacuum valve to open, and evacuate the battery cell using the second vacuum pump, and then control the first helium injection valve of the helium pipeline to open, to inject helium into the battery cell to complete the helium detection, and close the first helium injection valve; and if the major leak detection is failed, control the vacuum breaking valve to open, so as to, after the vacuum breaking is completed for the battery cell and the first main detection chamber, control the unloading manipulator to remove the battery cell from the first main detection chamber and transfer it to the re-detection chamber for re-detection, which can effectively reduce the waste of vacuum and helium resources during the helium detection process and improve the helium detection efficiency. It can be seen that the present application can improve the utilization rate of the vacuum and helium resources in the main detection procedure and effectively improve the detection efficiency of the major leak detection and the helium detection for battery cells by controlling and scheduling the action execution by related devices in the major leak process and the helium detection process in the main detection procedure.

In some embodiments of the present application, performing helium detection on a battery cell through a first helium detector includes:
the control device controlling the helium detection valve corresponding to the first helium detector to open, and sending a helium detection request to the host computer;
the host computer sending a helium detection instruction to the control device in response to the helium detection request;
the control device controlling the first helium detector to perform helium detection on the battery cell in response to the helium detection instruction; and
in a case where the helium detection is completed, the control device closing the helium detection valve.

In this embodiment, when controlling the performance of the helium detection on the battery cell, the control device can first open the helium detection valve corresponding to the first helium detector and send a helium detection request to the host computer. Then, upon receiving the helium detection instruction feedback from the host computer, the control device can control the first helium detector to perform the helium detection on the battery cell, and in a case where the helium detection is completed, close the helium detection valve, thereby improving the helium detection efficiency.

In some embodiments of the present application, the method further includes:
the control device controlling the second vacuum valve and the main valve to open, to start the second vacuum pump to evacuate the battery cell; and
in a case where the evacuation of the battery cell is completed, the control device closing the second vacuum valve.

In this embodiment, the control device can start the second vacuum pump by opening the second vacuum valve and the main valve, so as to perform evacuation operation on the battery cell, so that the relevant operations in the battery cell evacuation can be reasonably planned, thereby improving the operational efficiency of the battery cell evacuation.

In some embodiments of the present application, after in a case where the helium detection is completed, the control device closing the helium detection valve, the method further includes:
the control device controlling the second vacuum valve and the main valve to open, and extracting the helium from the battery cell using the second vacuum pump;
in a case where the helium clearing in the battery cell is completed, the control device closing the second vacuum valve; and
the control device controlling the vacuum breaking valve corresponding to the atmospheric pipeline to open, to break the vacuum of the battery cell and the first main detection chamber.

In this embodiment, the control device can further open the second vacuum valve and the main valve, so as to extract the helium from the battery cell using the second vacuum pump, and after the helium is cleared, close the second vacuum valve, and open the vacuum breaking valve connected to the atmosphere pipeline, so as to break the vacuum environment of the battery cell and the first main detection chamber, thereby improving the performance efficiency of helium clearing and vacuum breaking.

In some embodiments of the present application, after the control device controlling the unloading manipulator to transfer the battery cell to the re-detection chamber for re-detection, the method further includes:
in a case where the re-detection result of the battery cell is re-detection passed, the control device controlling the re-detection manipulator to transfer the battery cell from the re-detection chamber to the first buffer position; and
the control device controlling the unloading manipulator to transfer the battery cell from the first buffer position to the first unloading pull belt for unloading.

In this embodiment, the control device can control the re-detection manipulator to transfer the battery cell that has passed the re-detection to the first unloading pull belt, so as to unload the battery cell that has passed the re-detection.

In some embodiments of the present application, after the control device controlling the vacuum breaking valve corresponding to the atmospheric pipeline to open to break the vacuum of the battery cell and the first main detection chamber, the method further includes:
in a case where a detection result of the helium detection is detection passed, the control device transferring the battery cell from the first main detection chamber to the unloading position, and controlling the unloading manipulator to transfer the battery cell on the unloading position to the first unloading pull belt for unloading; and
in a case where the detection result of the helium detection is detection failed, the control device controlling the unloading manipulator to transfer the battery cell from the first main detection chamber to the re-detection chamber for re-detection.

In this embodiment, in a case where the battery cell has passed the major leak detection and helium detection of the main detection, the control device can transfer the battery cell from the first main detection chamber to the unloading position, and then transfer the battery cell on the unloading position to the first unloading pull belt through the unloading manipulator to complete the unloading; in addition, in a case where the battery cell has passed the major leak detection but failed the helium detection, the control device can transfer the battery cell that has failed the helium detection from the first main detection chamber to the re-detection chamber for re-detection, thereby achieving more comprehensive helium detection for the battery cell.

In some embodiments of the present application, the method further includes:
in a case where the re-detection result of the battery cell is re-detection failed, the control device controlling the re-detection manipulator to transfer the battery cell from the re-detection chamber to the second unloading pull belt for unloading.

In this embodiment, the control device can also transfer the battery cell that has failed the re-detection to the second unloading pull belt, so as to unload the battery cell that has failed the re-detection through the second unloading pull belt.

In some embodiments of the present application, the method further includes:
upon receiving a Hipot test passed message sent by the detection device, the control device controlling the loading manipulator to transfer the battery cell on the loading pull belt to the lower chamber of the first main detection chamber, and combining the upper chamber and the lower chamber of the first main detection chamber; and
in a case where the combination of the chambers is completed, the control device controlling the first vacuum valve to open, to complete the evacuation operation on the first main detection chamber.

In this embodiment, the control device can, in response to the Hipot test passed message sent by the detection device, control the loading manipulator to transfer the battery cell that has passed the Hipot test on the loading pull belt to the lower chamber of the first main detection chamber, and then combine the lower chamber and the upper chamber of the first main detection chamber, and then after the chambers are combined, perform the evacuation operation to complete the main detection procedure, which can improve the reliability of the main detection.

In some embodiments of the present application, the method further includes:
upon receiving a Hipot test failed message sent by the detection device, the control device controlling the loading manipulator to transfer the battery cell on the loading pull belt to the third unloading pull belt for unloading.

In this embodiment, the control device can further control the loading manipulator to transfer the battery cell that has failed the Hipot test on the loading pull belt to the third unloading pull belt, so as to unload the battery cell that has failed the Hipot test.

In some embodiments of the present application, the method further includes:
the control device controlling the loading manipulator to transfer a first number of battery cells from the loading pull belt to the first main detection chamber; and
in a case where the number of battery cells in the first main detection chamber reaches the first number, the control device controlling the first vacuum valve to open, thereby completing the main detection operation on the first number of battery cells.

In this embodiment, the control device can control the loading manipulator to transfer the first number of battery cells from the loading pull belt to the first main detection chamber. When the control device determines that the number of battery cells in the first main detection chamber reaches the first number, it can open the first vacuum valve, to complete the main detection operation on the first number of battery cells in the first main detection chamber, thereby improving the detection efficiency.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered limitation of the present application.
FIG. 1 is a first schematic structural diagram of components of a helium detection system according to an embodiment of the present application;
FIG. 2 is a second schematic structural diagram of components of a helium detection system according to an embodiment of the present application;
FIG. 3 is a third schematic structural diagram of components of a helium detection system according to an embodiment of the present application;
FIG. 4 is a fourth schematic structural diagram of components of a helium detection system according to an embodiment of the present application;
FIG. 5 is a schematic simulated diagram of a helium detection method according to an embodiment of the present application;
FIG. 6 is an implementation flowchart of a helium detection method according to an embodiment of the present application; and
FIG. 7 is a schematic timing diagram of a main detection procedure according to an embodiment of the present application.

### DETAILED DESCRIPTION

The technical solutions in the embodiments of the present application will be clearly and completely described below in conjunction with the drawings in the embodiments of the present application. It may be understood that specific embodiments described herein are intended only to explain the relevant application, but not to limit this application. It should also be noted that, for convenience of description, only parts relevant to the relevant application are shown in the drawings.

The application of new energy batteries in daily life and industry is becoming increasingly widespread. For example, new energy vehicles equipped with batteries have been widely applied. In addition, batteries are also being increasingly applied in the field of energy storage etc. New energy batteries are not only applied to energy storage power source systems such as hydraulic, thermal, wind, and solar power stations, but also widely applied to electric vehicles such as electric bicycles, electric motorcycles, and electric vehicles, as well as aerospace and other fields. With the continuous expansion of the application field of power batteries, the demand in the market is also constantly expanding.

At present, the process of manufacturing batteries involves helium detection for battery cells. However, in the helium detection process, there are still problems of waste of vacuum resources and helium resources, as well as low detection efficiency. Improving the efficiency of helium detection can reduce production costs, detect helium leaks more comprehensively and accurately, ensure product quality, reduce the chance of defective products entering the market, and improve the safety of lithium batteries. Therefore, it is a problem that needs to be solved urgently at present to improve the detection efficiency of helium detection. To solve the problems existing in current helium detection, embodiments of the present application provide a helium detection system and method. The control device in the helium detection system can control the loading manipulator to transfer the battery cell to any idle first main detection chamber among the multiple main detection chambers, and then open the first vacuum valve connected to the first vacuum pump, so that the first main detection chamber can be evacuated using the first vacuum pump, and after the evacuation is completed, close the first vacuum valve, and perform major leak detection on the battery cell, which can effectively reduce the waste of vacuum resources and improve the efficiency of the major leak detection. Then, in a case where the major leak detection is passed, the control device can continue to control the second vacuum valve to open, and evacuate the battery cell using the second vacuum pump, and then control the first helium injection valve of the helium pipeline to open, to inject helium into the battery cell to complete the helium detection, and close the first helium injection valve, which can effectively reduce the waste of vacuum and helium resources during the helium detection process and improve the helium detection efficiency. It can be seen that the present application can improve the utilization rate of the vacuum and helium resources in the main detection procedure and effectively improve the detection efficiency of the major leak detection and the helium detection for battery cells by controlling and scheduling the action execution by related devices in the major leak process and the helium detection process in the main detection procedure.

The technical solutions in the embodiments of the present application will be clearly and completely described below in conjunction with the drawings in the embodiments of the present application.

The description of the system in the embodiment of the present application is similar to the following description of the method embodiment, and has similar beneficial effects as the method embodiment. For technical details not disclosed in the method embodiment, please refer to the description of the system embodiment of the present application for understanding.

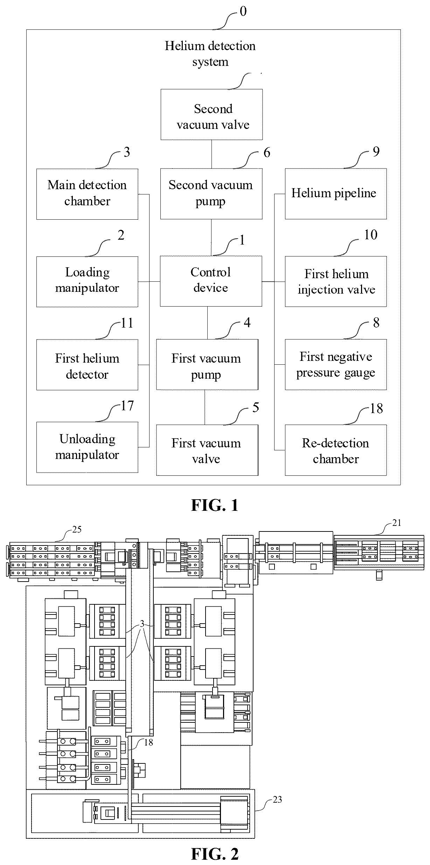

An embodiment of the present application provides a helium detection system. As shown in FIG. 1, the helium detection system 0 may include a control device 1, a loading manipulator 2, a main detection chamber 3, a first vacuum pump 4, a first vacuum valve 5, a second vacuum pump 6, a second vacuum valve 7, a first negative pressure gauge 8, a helium pipeline 9, a first helium injection valve 10, a first helium detector 11, an unloading manipulator 17, and a re-detection chamber 18; where there may be multiple main detection chambers 3.

It should be noted that, in the embodiments of the present application, a battery cell may be the essential part constituting a battery. Each battery may be formed by one or more battery cells through assembling. The battery may be a battery cell. The battery cell refers to a basic unit that can achieve mutual conversion between chemical energy and electric energy, and can be used for manufacturing a battery module or a battery pack, thereby supplying power to an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium-metal battery, a sodium-metal battery, a lithium-sulfur battery, a magnesium-ion battery, a nickel-metal hydride battery, a nickel-cadmium battery, a lead storage battery, and so forth, which is not limited in the embodiments of the present application.

In an embodiment of the present application, the battery may also be a single physical module including one or more battery cells to provide a higher voltage and capacity. When there are a plurality of battery cells, the plurality of battery cells are connected by series connection, or parallel connection, or parallel-series connection through a bus component.

In an embodiment of the present application, the control device 1 may be a Programmable Logic Controller (PLC).

It should be noted that, in an embodiment of the present application, the loading manipulator 2 can be configured to grab a battery cell from a loading pull belt 25 and transfer it to the first main detection chamber.

It should be noted that, in an embodiment of the present application, the first main detection chamber is any idle chamber among the multiple main detection chambers 3; the number of the multiple main detection chambers 3 is not limited in the present application. For example, as shown in FIG. 2, the helium detection system 0 may include four main detection chambers 3.

In an embodiment of the present application, the control device 1 can be configured to control the loading manipulator 2 to transfer the battery cell to the first main detection chamber, and control the first vacuum valve 5 corresponding to the first main detection chamber to open, and evacuate the first main detection chamber through the first vacuum pump 4; in a case where the evacuation of the first main detection chamber is completed, close the first vacuum valve 5, and perform major leak detection on the battery cell through the first negative pressure gauge 8; in a case where a detection result of the major leak detection is detection passed, control the second vacuum valve 7 to open, to start the second vacuum pump 6 to evacuate the battery cell; in a case where the evacuation of the battery cell is completed, control the first helium injection valve 10 of the helium pipeline 9 to open, to inject helium into the battery cell; and in a case where the helium injection is completed, close the first helium injection valve 10, and perform helium detection on the battery cell through the first helium detector 11, thereby completing the main detection operation on the battery cell.

In an embodiment of the present application, a vacuum pump refers to a device or apparatus that obtains a vacuum by evacuating air from a container to be evacuated by using mechanical, physical, chemical, or physicochemical methods. The present application does not limit the first vacuum pump 4 and the second vacuum pump 6. For example, the first vacuum pump 4 may be any one of a D60C vacuum pump and a D16C vacuum pump, and the second vacuum pump 6 may also be any one of a D60C vacuum pump and a D16C vacuum pump.

In an embodiment of the present application, the first negative pressure gauge is an elastic sensitive element with an absolute pressure lower than the atmospheric pressure. The first negative pressure gauge can be used to perform a pressure test on the battery cell in the first main detection chamber after evacuation. When the decrease in the measured pressure data of the battery cell compared with the pressure data before evacuation is greater than a preset decrease parameter, it indicates that there is a leak in the battery cell, and the detection result of the major leak detection is detection failed; otherwise the detection result of the major leak detection is detection passed.

It should be noted that, in an embodiment of the present application, the first vacuum valve 5 is connected to the first vacuum pump 4, and the second vacuum valve 7 is connected to the second vacuum pump 6.

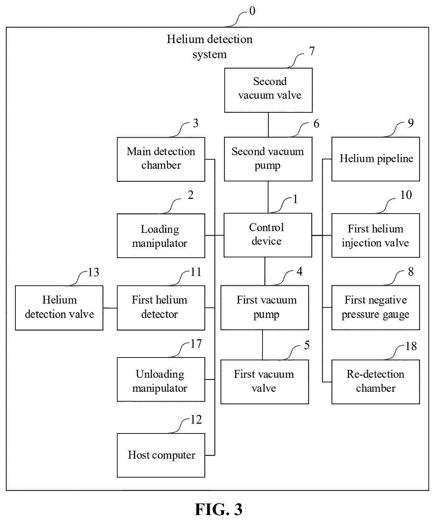

In an embodiment of the present application, as shown in FIG. 3, the helium detection system 0 may further include a host computer 12 and a helium detection valve 13, and the helium detection valve 13 is connected to the first helium detector 11.

In an embodiment of the present application, the first helium detector 11 can be configured to detect the concentration of helium molecules in the first main detection chamber. When the detected helium molecule concentration value is greater than a preset reference value, it indicates that there is a micro-leak into the battery cell, so that the helium injected into the battery cell enters the first main detection chamber, so the detection result of the helium detection can be determined as detection failed, otherwise the detection result of the helium detection can be determined as detection passed. The present application does not limit the type of the first helium detector 11, for example, the first helium detector 11 may be a helium mass spectrometer leak detector.

In an embodiment of the present application, the host computer 12 refers to a computer that can directly issue control commands, for example, a personal computer (PC) or a host.

The control device 1 can further be configured to control the helium detection valve 13 corresponding to the first helium detector 11 to open, and send a helium detection request to the host computer 12.

It can be understood that, in an embodiment of the present application, only when the helium detection valve 13 is opened is the first helium detector 11 in working state to start detecting the helium molecule concentration.

In an embodiment of the present application, the host computer 12 can be configured to send a helium detection instruction to the control device 1 in response to the helium detection request.

In an embodiment of the present application, the control device 1 can further be configured to control the first helium detector 11 to perform helium detection on the battery cell in response to the helium detection instruction; and in a case where the helium detection is completed, close the helium detection valve 13.

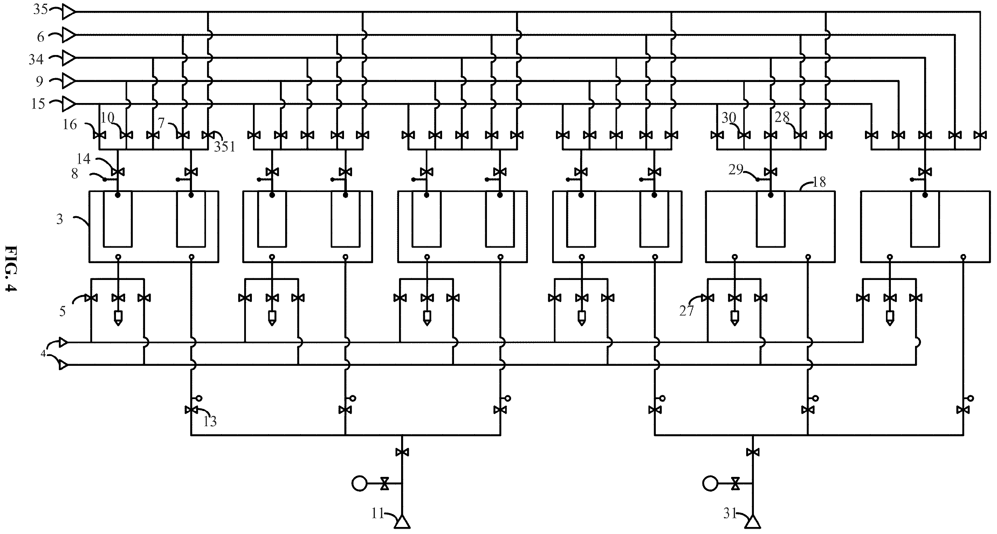

In an embodiment of the present application, as shown in FIG. 4, the helium detection system 0 may further include a main valve 14.

The control device 1 can further be configured to control the second vacuum valve 7 and the main valve 14 to open, to start the second vacuum pump 6 to evacuate the battery cell; and in a case where the evacuation of the battery cell is completed, close the second vacuum valve 7.

It should be noted that the second vacuum pump 6 can be started only when both the second vacuum valve 7 and the main valve 14 are opened. When only either one of the second vacuum valve 7 and the main valve 14 is opened, the second vacuum pump 6 cannot be started.

The control device 1 can further be configured to, in a case where the first helium injection valve 10 is closed, close the main valve 14.

In an embodiment of the present application, as shown in FIG. 4, the helium detection system 0 may further include an atmospheric pipeline 15 and a vacuum breaking valve 16 connected to the atmospheric pipeline 15.

The control device 1 can further be configured to control the second vacuum valve 7 and the main valve 14 to open, and extract the helium from the battery cell using the second vacuum pump 6; in a case where the helium clearing in the battery cell is completed, close the second vacuum valve 7; and control the vacuum breaking valve 16 to open, and break the vacuum of the battery cell and the first main detection chamber through the atmospheric pipeline 15.

In some embodiments of the present application, the vacuum breaking valve 16 may include a battery cell vacuum breaking valve and a chamber vacuum breaking valve; where the battery cell vacuum breaking valve and the chamber vacuum breaking valve may both be connected to the atmosphere pipeline 15; the battery cell vacuum breaking valve can be configured to break the vacuum of the battery cell, and the chamber vacuum breaking valve can be configured to break the vacuum of the first main detection chamber.

It should be noted that, in an embodiment of the present application, after the helium detection, whether or not the helium detection is passed, a vacuum breaking operation needs to be performed to remove the battery cell from the first main detection chamber.

In some embodiments of the present application, after the vacuum of the battery cell and the first main detection chamber is broken, the first main detection chamber can be opened, that is, the upper chamber and the lower chamber of the first main detection chamber can be separated, and the battery cell located in the lower chamber is removed using the unloading manipulator 17.

It can be understood that, in an embodiment of the present application, the vacuum valve, helium injection valve, helium detection valve, main valve, vacuum breaking valve, etc., are all valves or accessories used to open and close corresponding pipelines or apparatuses.

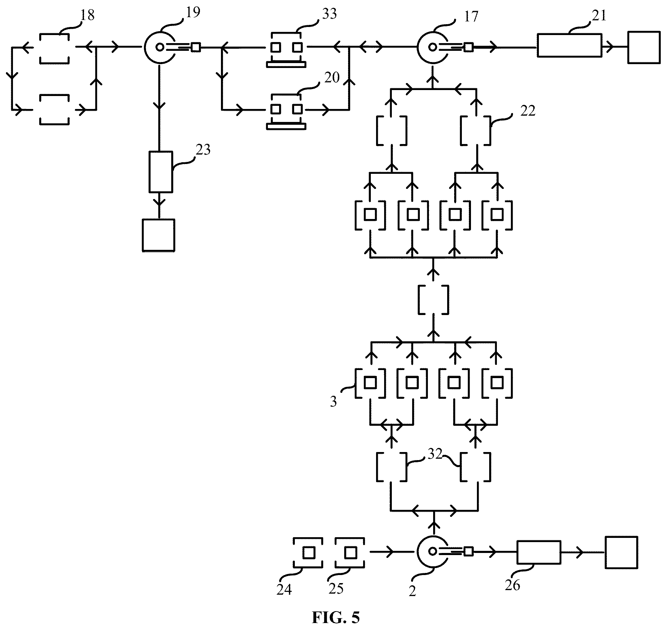

In an embodiment of the present application, FIG. 5 is a schematic simulated diagram of a helium detection method according to an embodiment of the present application. As shown in FIGS. 2, 3, 4, and 5, the helium detection system may further include an unloading manipulator 17 and a re-detection chamber 18.

In an embodiment of the present application, the number of the re-detection chambers 18 is not limited in the present application. For example, the number of the re-detection chambers 18 may be two.

In an embodiment of the present application, the number of battery cells that can be accommodated in the re-detection chamber 18 is a second number, and the second number is not limited in the present application. For example, the second number may be four, that is, the re-detection chamber 18 can accommodate four battery cells for re-detection at a time.

In an embodiment of the present application, the structure of the re-detection chamber 18 may be the same as that of the main detection chamber 3, and the re-detection chamber 18 may also include a lower chamber and an upper chamber; however, the major leak detection and helium detection performed in the re-detection chamber 18 are both re-detections.

It should be noted that, in an embodiment of the present application, in the main detection procedure for the battery cell, it is necessary to perform re-detection when the detection result of either the major leak detection or the helium detection is failure.

In an embodiment of the present application, the unloading manipulator 17 can be configured to transfer the battery cell in the first main detection chamber to the re-detection chamber 18, or transfer the battery cell in the first main detection chamber to the unloading pull belt.

In an embodiment of the present application, when the control device 1 controls the unloading manipulator 17 to transfer the battery cell that has failed the major leak detection or the helium detection in the first main detection chamber to the re-detection chamber 18, it can first control the unloading manipulator 17 to transfer the battery cell that has failed the major leak detection or the helium detection in the first main detection chamber to a defective battery cell buffer position 33, and then control the re-detection manipulator to transfer the battery cell that has failed the major leak detection or the helium detection on the defective battery cell buffer position 33 to the re-detection chamber 18.

The control device 1 can further be configured to, in a case where the detection result of the major leak detection is detection failed, control the vacuum breaking valve 16 to open, and break the vacuum of the battery cell and the first main detection chamber through the atmospheric pipeline 15; and control the unloading manipulator 17 to transfer the battery cell to the re-detection chamber 18 for re-detection; where the re-detection includes re-detection for the major leak detection and re-detection for the helium detection.

In an embodiment of the present application, the helium detection system 0 may further include a third vacuum valve 27, a fourth vacuum valve 28, a second negative pressure gauge 29, a second helium injection valve 30, and a second helium detector 31; where the third vacuum valve 27 may be connected to the first vacuum pump, and the fourth vacuum valve 28 may be connected to the second vacuum pump. When the control device 1 performs re-detection on the battery cell in the re-detection chamber 18, it can control the third vacuum valve 27 corresponding to the re-detection chamber 18 to open, and evacuate the re-detection chamber 18 through the first vacuum pump; in a case where the evacuation of the re-detection chamber 18 is completed, close the third vacuum valve 27, and perform re-detection for the major leak detection on the battery cell through the second negative pressure gauge 29; in a case where the detection result of the re-detection for the major leak detection is detection passed, control the fourth vacuum valve 28 to open, to start the second vacuum pump to evacuate the battery cell; in a case where the evacuation of the battery cell is completed, control the second helium injection valve 30 to open, to inject helium into the battery cell; and in a case where the helium injection is completed, close the second helium injection valve 30, and perform the re-detection for the helium detection on the battery cell through the second helium detector 31, thereby completing the re-detection operation on the battery cell.

It should be noted that, in an embodiment of the present application, the second negative pressure gauge 29 can be configured to perform a pressure test on the battery cell in the re-detection chamber 18 after evacuation. When the decrease in the measured pressure data of the battery cell compared with the pressure data before evacuation is greater than a preset decrease parameter, it indicates that there is a leak in the battery cell, and the detection result of the re-detection for the major leak detection is detection failed; otherwise the detection result of the re-detection for the major leak detection is detection passed.

It should be noted that, in an embodiment of the present application, the second helium injection valve 30 may be connected to the helium pipeline 9, so that when the second helium injection valve 30 is opened, helium can be injected into the battery cell in the re-detection chamber 18 through the helium pipeline 9.

It can be understood that, in an embodiment of the present application, when the battery cell has failed the major leak detection, since the battery cell needs to be removed from the first main detection chamber for re-detection, it is necessary to break the vacuum of the first main detection chamber and the battery cell, and then remove the battery cell by controlling the unloading manipulator 17.

In an embodiment of the present application, as shown in FIG. 5, the helium detection system may further include a re-detection manipulator 19, a first buffer position 20, a first unloading pull belt 21, an unloading position 22, a second unloading pull belt 23, a detection device 24, a loading pull belt 25, and a third unloading pull belt 26; in addition, as shown in FIG. 4, the helium detection system may further include a helium recovery pipeline 34, which can be configured to recover the helium extracted from the battery cell, and the helium detection system may further include a nitrogen pipeline 35 and a nitrogen helium clearing valve 351. When the control device 1 opens the nitrogen helium clearing valve 351, the battery cell can be cleared using the nitrogen pipeline 35.

The control device 1 can further be configured to, in a case where the re-detection result for the battery cell is re-detection passed, control the re-detection manipulator 19 to transfer the battery cell from the re-detection chamber 18 to the first buffer position 20; and control the unloading manipulator 17 to transfer the battery cell from the first buffer position 20 to the first unloading pull belt 21 for unloading.

In an embodiment of the present application, the first buffer position 20 may be used for placing the battery cell that has passed the re-detection.

It should be noted that, in an embodiment of the present application, when the detection result corresponding to the re-detection for the major leak detection and the detection result corresponding to the re-detection for the helium detection are both pass, the control device 1 can determine the re-detection result as re-detection passed.

The control device 1 can further be configured to, in a case where the detection result of the helium detection is detection passed, transfer the battery cell from the first main detection chamber to the unloading position 22, and control the unloading manipulator 17 to transfer the battery cell on the unloading position 22 to the first unloading pull belt 21 for unloading; and in a case where the detection result of the helium detection is detection failed, control the unloading manipulator 17 to transfer the battery cell from the first main detection chamber to the re-detection chamber 18 for re-detection.

It can be understood that, in an embodiment of the present application, the unloading position 22 can be used for placing the battery cell that has passed the main detection; and the number of battery cells that can be accommodated in the unloading position 22 is not limited in the present application.

In an embodiment of the present application, the first unloading pull belt 21 can be configured to unload the battery cell that has passed the main detection or re-detection.

The control device 1 can further be configured to, in a case where the re-detection result for the battery cell is re-detection failed, control the re-detection manipulator 19 to transfer the battery cell from the re-detection chamber 18 to the second unloading pull belt 23 for unloading.

In an embodiment of the present application, the second unloading pull belt 23 can be configured to unload the battery cell that has failed the re-detection.

The detection device 24 can be configured to perform a Hipot test on the battery cell.

In an embodiment of the present application, the detection device 24 may be a detection device that can be configured to perform a Hipot test; where the Hipot test can be used to detect the insulation of the battery cell to determine whether the battery cell has good insulation.

The control device 1 can be further configured to, upon receiving a Hipot test passed message sent by the detection device 24, control the loading manipulator 2 to transfer the battery cell on the loading pull belt 25 to the lower chamber of the first main detection chamber, and combine the upper chamber and the lower chamber of the first main detection chamber; and in a case where the combination of the chambers is completed, control the first vacuum valve 5 to open, to complete the evacuation operation on the first main detection chamber.

In some embodiments of the present application, by way of example, as shown in FIG. 5, a barcode of the loaded battery cell can first be scanned, for example, the barcode of the battery cell can be scanned by a barcode scanner, and then the battery cell can be subjected to a Hipot test using the detection device 24. When the control device 1 receives the Hipot test passed message sent by the detection device 24, it can control the loading manipulator 2 to transfer the battery cell on the loading pull belt 25 to the loading position 32, which may include, for example, two loading positions 32; and the control device 1 can transfer the battery cell to the first main detection chamber through the loading position 32.

The control device 1 can further be configured to, upon receiving a Hipot test failed message sent by the detection device 24, control the loading manipulator 2 to transfer the battery cell on the loading pull belt 25 to the third unloading pull belt 26 for unloading.

In an embodiment of the present application, in a case where the battery cell has failed the barcode scanning, for example, in a case where the battery cell is a defective (not good, NG) battery cell, the control device 1 can further control the loading manipulator 2 to transfer the battery cell to the third unloading pull belt 26 for unloading.

In an embodiment of the present application, the third unloading pull belt 26 can be configured to unload the battery cell that has failed the Hipot test.

The control device 1 can also be configured to control the loading manipulator 2 to transfer a first number of battery cells from the loading pull belt 25 to the first main detection chamber; and in a case where the number of battery cells in the first main detection chamber reaches the first number, control the first vacuum valve 5 to open, thereby completing the main detection operation on the first number of battery cells.

It should be noted that, in an embodiment of the present application, the first number is not limited in the present application, for example, the first number may be four, and the control device 1 can control the loading manipulator 2 to transfer the battery cells from the loading pull belt 25 to the lower chamber of the first main detection chamber, where the number of battery cells that the loading manipulator 2 can grasp at a time is not limited in the present application, for example, the number may be four, so that after the loading manipulator 2 transfers four battery cells from the loading pull belt 25 to the first main detection chamber and closes the first main detection chamber, the first vacuum valve can be controlled to open, so that it is possible to complete the main detection operation on four battery cells in the first main detection chamber at a single time.

In some embodiments of the present application, during the main detection for the first number of battery cells in the first main detection chamber, when there is a battery cell that has failed the major leak detection or the helium detection, the control device 1 can control the unloading manipulator to remove the battery cell that has failed the major leak detection or the helium detection and transfer it to the re-detection chamber after the vacuum breaking operation is completed.

By way of example, if one of the four battery cells in the first main detection chamber has failed the helium detection, the control device 1 can remove the one battery cell that has failed the helium detection and transfer it to the re-detection chamber after the vacuum breaking operation for the first main detection chamber and the four battery cells is completed.

In some embodiments of the present application, during the re-detection for a second number of battery cells in the re-detection chamber, when there is a battery cell that has failed the re-detection for the major leak detection or the re-detection for the helium detection, the control device 1 can control the re-detection manipulator 19 to remove the battery cell that has failed the re-detection for the major leak detection or the re-detection for the helium detection and transfer it to the second unloading pull belt 23 for unloading after the vacuum breaking operation on the re-detection chamber and the second number of battery cells therein is completed; and when there is a battery cell that has passed the re-detection for the major leak detection and the re-detection for the helium detection, the control device 1 can control the re-detection manipulator 19 to remove the battery cell that has passed the re-detection for the major leak detection and the re-detection for the helium detection and transfer it to the first buffer position 20.

In summary, the helium detection system in the present application can reduce the false positive rate by connecting vacuum pumps, negative pressure gauges, and other apparatuses in the form of a main valve and a combined functional valve to perform the helium detection method; the first vacuum pump and the second vacuum pump can be connected in series with all the main detection chambers and re-detection chambers, which can increase the flexibility of vacuum pump invocations and the utilization rate of vacuum resources; meanwhile, the first helium detector corresponds to the main detection chamber, and the second helium detector corresponds to the re-detection chamber, which can make full use of the helium detectors and improve the helium detection efficiency; in addition, various pipelines in the helium detection system adopt an independent pipeline design, which can reduce the helium clearing time.

This embodiment provides a helium detection system. The control device of the helium detection system can control the loading manipulator to transfer the battery cell to any idle first main detection chamber among the multiple main detection chambers, and then open the first vacuum valve connected to the first vacuum pump, so that the first main detection chamber can be evacuated using the first vacuum pump, and after the evacuation is completed, close the first vacuum valve, and perform major leak detection on the battery cell, which can effectively reduce the waste of vacuum resources and improve the efficiency of the major leak detection. Then, in a case where the major leak detection is passed, the control device can continue to control the second vacuum valve to open, and evacuate the battery cell using the second vacuum pump, and then control the first helium injection valve of the helium pipeline to open, to inject helium into the battery cell to complete the helium detection, and close the first helium injection valve; and if the major leak detection is failed, control the vacuum breaking valve to open, so as to, after the vacuum breaking is completed for the battery cell and the first main detection chamber, control the unloading manipulator to remove the battery cell from the first main detection chamber and transfer it to the re-detection chamber for re-detection, which can effectively reduce the waste of vacuum and helium resources during the helium detection process and improve the helium detection efficiency. It can be seen that the present application can improve the utilization rate of the vacuum and helium resources in the main detection procedure and effectively improve the detection efficiency of major leak detection and helium detection for battery cells by controlling and scheduling the action execution by related devices in the major leak process and the helium detection process in the main detection procedure.

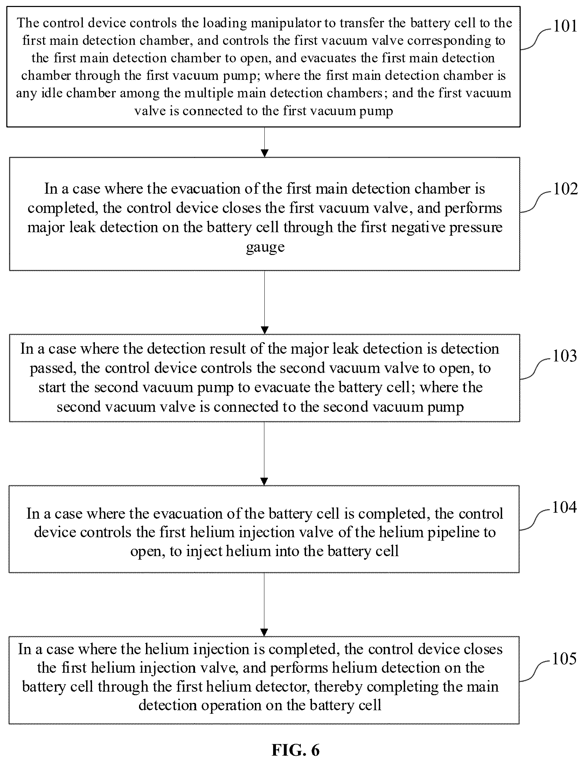

Another embodiment of the present application provides a helium detection method, which is applied to a helium detection system. As shown in FIG. 6, the helium detection method performed by the helium detection system may include the following steps.

Step 101: the control device controls the loading manipulator to transfer the battery cell to the first main detection chamber, and controls the first vacuum valve corresponding to the first main detection chamber to open, and evacuates the first main detection chamber through the first vacuum pump; where the first main detection chamber is any idle chamber among the multiple main detection chambers; and the first vacuum valve is connected to the first vacuum pump.

In an embodiment of the present application, the control device controls the loading manipulator to transfer the battery cell to the first main detection chamber, and controls the first vacuum valve corresponding to the first main detection chamber to open, and evacuates the first main detection chamber through the first vacuum pump; where the first main detection chamber is any idle chamber among the multiple main detection chambers; and the first vacuum valve is connected to the first vacuum pump.

It should be noted that, in an embodiment of the present application, the first main detection chamber is any idle chamber among the multiple main detection chambers 3. The number of the multiple main detection chambers 3 is not limited in the present application. For example, the helium detection system 0 may include four main detection chambers.

In an embodiment of the present application, a vacuum pump refers to a device or apparatus that obtains a vacuum by evacuating air from a container to be evacuated by using mechanical, physical, chemical, or physicochemical methods. The present application does not limit the first vacuum pump 4 and the second vacuum pump 6. For example, the first vacuum pump 4 may be any one of a D60C vacuum pump and a D16C vacuum pump, and the second vacuum pump 6 may also be any one of a D60C vacuum pump and a D16C vacuum pump.

In some embodiments of the present application, the control device can, upon receiving a Hipot test passed message sent by the detection device, control the loading manipulator to transfer the battery cell on the loading pull belt to the lower chamber of the first main detection chamber, and combine the upper chamber and the lower chamber of the first main detection chamber; and then, in a case where the combination of the chambers is completed, control the first vacuum valve to open, to complete the evacuation operation on the first main detection chamber.

In some embodiments of the present application, upon receiving a Hipot test failed message sent by the detection device, the control device can control the loading manipulator to transfer the battery cell on the loading pull belt to the third unloading pull belt for unloading.

It should be noted that, in an embodiment of the present application, the Hipot test can be used to detect the insulation of the battery cell to determine whether the battery cell has good insulation.

In some embodiments of the present application, the control device controls the loading manipulator to transfer a first number of battery cells from the loading pull belt to the first main detection chamber.

In some embodiments of the present application, in a case where the number of battery cells in the first main detection chamber reaches the first number, the control device controls the first vacuum valve to open, thereby completing the main detection operation on the first number of battery cells.

In some embodiments of the present application, the control device can, upon receiving a Hipot test passed message sent by the detection device, control the loading manipulator to transfer the battery cell on the loading pull belt to the lower chamber of the first main detection chamber, and combine the upper chamber and the lower chamber of the first main detection chamber; and in a case where the combination of the chambers is completed, control the first vacuum valve to open, to complete the evacuation operation on the first main detection chamber.

In some embodiments of the present application, upon receiving a Hipot test failed message sent by the detection device, the control device can further control the loading manipulator to transfer the battery cell on the loading pull belt to the third unloading pull belt for unloading.

Step 102: in a case where the evacuation of the first main detection chamber is completed, the control device closes the first vacuum valve, and performs major leak detection on the battery cell through a first negative pressure gauge.

In an embodiment of the present application, the control device controls the loading manipulator to transfer the battery cell to the first main detection chamber, and controls the first vacuum valve corresponding to the first main detection chamber to open. After the first main detection chamber is evacuated through the first vacuum pump, in a case where the evacuation of the first main detection chamber is completed, the control device can close the first vacuum valve, and perform major leak detection on the battery cell through the first negative pressure gauge.

In an embodiment of the present application, the first negative pressure gauge is an elastic sensitive element with an absolute pressure lower than the atmospheric pressure. The first negative pressure gauge can be used to perform a pressure test on the battery cell in the first main detection chamber after evacuation. When the decrease in the measured pressure data of the battery cell compared with the pressure data before evacuation is greater than a preset decrease parameter, it indicates that there is a leak in the battery cell, and the detection result of the major leak detection is detection failed; otherwise the detection result of the major leak detection is detection passed.

It should be noted that, in an embodiment of the present application, the principle of major leak detection can be understood as a pressure difference method. Major leak detection can screen out battery cells with major leaks, and helium detection performed after the major leak detection can detect micro helium leaks, thereby screening out battery cells with micro leaks.

Step 103: in a case where the detection result of the major leak detection is detection passed, the control device controls the second vacuum valve to open, to start the second vacuum pump to evacuate the battery cell; where the second vacuum valve is connected to the second vacuum pump.

In an embodiment of the present application, after in a case where the evacuation of the first main detection chamber is completed, the control device closes the first vacuum valve, and performs the major leak detection on the battery cell through the first negative pressure gauge, in a case where the detection result of the major leak detection is detection passed, it can control the second vacuum valve to open, to start the second vacuum pump to evacuate the battery cell; where the second vacuum valve is connected to the second vacuum pump.

Step 104: in a case where the evacuation of the battery cell is completed, the control device controls the first helium injection valve of the helium pipeline to open, to inject helium into the battery cell.

In an embodiment of the present application, after in a case where the detection result of the major leak detection is detection passed, the control device controls the second vacuum valve to open, to start the second vacuum pump to evacuate the battery cell, the control device can, in a case where the evacuation of the battery cell is completed, control the first helium injection valve of the helium pipeline to open, to inject helium into the battery cell.

Step 105: in a case where the helium injection is completed, the control device closes the first helium injection valve, and performs helium detection on the battery cell through the first helium detector, thereby completing the main detection operation on the battery cell.

In an embodiment of the present application, after in a case where the evacuation of the battery cell is completed, the control device controls the first helium injection valve of the helium pipeline to open, to inject helium into the battery cell, the control device can, in a case where the helium injection is completed, close the first helium injection valve, and perform helium detection on the battery cell through the first helium detector, thereby completing the main detection operation on the battery cell.

In an embodiment of the present application, the first helium detector can be configured to detect the concentration of helium molecules in the first main detection chamber. When the detected helium molecule concentration value is greater than a preset reference value, it indicates that there is a micro-leak into the battery cell, so that the helium injected into the battery cell enters the first main detection chamber, so the detection result of the helium detection can be determined as detection failed, otherwise the detection result of the helium detection can be determined as detection passed. The present application does not limit the type of the first helium detector, for example, the first helium detector may be a helium mass spectrometer leak detector.

In some embodiments of the present application, when a battery cell is subjected to helium detection through the first helium detector, the control device can control the helium detection valve corresponding to the first helium detector to open, and send a helium detection request to the host computer; the host computer sends a helium detection instruction to the control device in response to the helium detection request; the control device controls the first helium detector to perform the helium detection on the battery cell in response to the helium detection instruction; and in a case where the helium detection is completed, the control device closes the helium detection valve.

In some embodiments of the present application, the control device can control the second vacuum valve and the main valve to open, to start the second vacuum pump to evacuate the battery cell; and in a case where the evacuation of the battery cell is completed, the control device closes the second vacuum valve.

It should be noted that, in an embodiment of the present application, after the helium detection, whether or not the helium detection is passed, a vacuum breaking operation needs to be performed to remove the battery cell from the first main detection chamber.

In some embodiments of the present application, after in a case where the helium detection is completed, the control device closes the helium detection valve, the control device can control the second vacuum valve and the main valve to open, and extract the helium from the battery cell using the second vacuum pump; in a case where the helium clearing in the battery cell is completed, close the second vacuum valve; and then the control device can control the vacuum breaking valve corresponding to the atmospheric pipeline to open, to break the vacuum of the battery cell and the first main detection chamber.

In some embodiments of the present application, after the vacuum of the battery cell and the first main detection chamber is broken, the first main detection chamber can be opened, that is, the upper chamber and the lower chamber of the first main detection chamber are separated, and the battery cell in the lower chamber is removed using the unloading manipulator.

In some embodiments of the present application, after in a case where the evacuation of the first main detection chamber is completed, the control device closes the first vacuum valve, and performs major leak detection on the battery cell through the first negative pressure gauge, the control device can also, in a case where the detection result of the major leak detection is detection failed, control the vacuum breaking valve corresponding to the atmospheric pipeline to open, and break the vacuum of the battery cell and the first main detection chamber through the atmospheric pipeline; and then control the unloading manipulator to transfer the battery cell to the re-detection chamber for re-detection; where the re-detection includes re-detection for the major leak detection and re-detection for the helium detection.

In an embodiment of the present application, the number of the re-detection chambers is not limited in the present application; for example, the number of the re-detection chambers may be two.

In an embodiment of the present application, the number of battery cells that can be accommodated in the re-detection chamber is a second number, and the second number is not limited in the present application. For example, the second number may be, that is, the re-detection chamber can accommodate four battery cells for re-detection at a time.

In an embodiment of the present application, the structure of the re-detection chamber may be the same as that of the main detection chamber, and the re-detection chamber may also include a lower chamber and an upper chamber; however, the major leak detection and helium detection performed in the re-detection chamber are both re-detections.

It should be noted that, in an embodiment of the present application, in the main detection procedure for the battery cell, it is necessary to perform re-detection when the detection result of either the major leak detection or the helium detection is failure.

In some embodiments of the present application, after the control device controls the unloading manipulator to transfer the battery cell to the re-detection chamber for re-detection, the control device can, in a case where the re-detection result for the battery cell is re-detection passed, control the re-detection manipulator to transfer the battery cell from the re-detection chamber to the first buffer position; and then control the unloading manipulator to transfer the battery cell from the first buffer position to the first unloading pull belt for unloading.

In some embodiments of the present application, after the control device controls the vacuum breaking valve corresponding to the atmospheric pipeline to open, to break the vacuum of the battery cell and the first main detection chamber, the control device can, in a case where the helium detection result is detection passed, transfer the battery cell from the first main detection chamber to the unloading position, and control the unloading manipulator to transfer the battery cell on the unloading position to the first unloading pull belt for unloading.

In some embodiments of the present application, after the control device controls the vacuum breaking valve corresponding to the atmospheric pipeline to open, to break the vacuum of the battery cell and the first main detection chamber, the control device can further, in a case where the detection result of the helium detection is detection failed, control the unloading manipulator to transfer the battery cell from the first main detection chamber to the re-detection chamber for re-detection.

In an embodiment of the present application, the helium detection system may further include a third vacuum valve, a fourth vacuum valve, a second negative pressure gauge, a second helium injection valve, and a second helium detector; where the third vacuum valve may be connected to the first vacuum pump, and the fourth vacuum valve may be connected to the second vacuum pump. when the control device performs re-detection on the battery cell in the re-detection chamber, it can control the third vacuum valve corresponding to the re-detection chamber to open, and evacuate the re-detection chamber through the first vacuum pump; in a case where the evacuation of the re-detection chamber is completed, close the third vacuum valve, and perform re-detection for the major leak detection on the battery cell through the second negative pressure gauge; in a case where the detection result of the re-detection for the major leak detection is detection passed, control the fourth vacuum valve to open, to start the second vacuum pump to evacuate the battery cell; in a case where the evacuation of the battery cell is completed, control the second helium injection valve to open, to inject helium into the battery cell; and in a case where the helium injection is completed, close the second helium injection valve, and perform re-detection for the helium detection on the battery cell through the second helium detector, thereby completing the re-detection operation on the battery cell.

It should be noted that, in an embodiment of the present application, the second helium injection valve may be connected to the helium pipeline, so that in a case where the second helium injection valve is opened, helium can be injected into the battery cell in the re-detection chamber through the helium pipeline.

It should be noted that, in an embodiment of the present application, the second negative pressure gauge can be configured to perform a pressure test on the battery cell in the re-detection chamber after evacuation. When the decrease in the measured pressure data of the battery cell compared with the pressure data before evacuation is greater than a preset decrease parameter, it indicates that there is a leak in the battery cell, and the detection result of the re-detection for the major leak detection is detection failed; otherwise the detection result of the re-detection for the major leak detection is detection passed.

It can be understood that, in an embodiment of the present application, when the battery cell has failed the major leak detection, since the battery cell needs to be removed from the first main detection chamber for re-detection, it is necessary to break the vacuum of the first main detection chamber and the battery cell, and then remove the battery cell by controlling the unloading manipulator 17.

In some embodiments of the present application, in a case where the re-detection result for the battery cell is re-detection failed, the control device can control the re-detection manipulator to transfer the battery cell from the re-detection chamber to the second unloading pull belt for unloading.

In some embodiments of the present application, during the re-detection for a second number of battery cells in the re-detection chamber, in a case where there is a battery cell that has failed the re-detection for the major leak detection or the re-detection for the helium detection, after the vacuum breaking operation on the re-detection chamber and the second number of battery cells therein is completed, the control device can control the re-detection manipulator to remove the battery cell that has failed the re-detection for the major leak detection or the re-detection for the helium detection and transfer it to the second unloading pull belt for unloading; and in a case where there is a battery cell that has passed the re-detection for the major leak detection and the re-detection for the helium detection, the control device can control the re-detection manipulator to remove the battery cell that has passed the re-detection for the major leak detection and the re-detection for the helium detection and transfer it to the first buffer position.

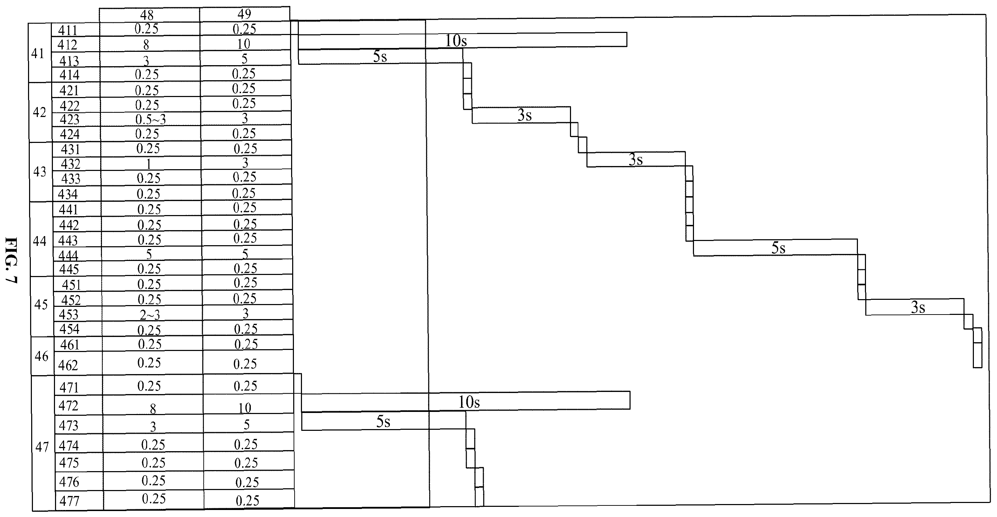

In some embodiments of the present application, by way of example, as shown in FIG. 7, the timing diagram of the main detection procedure may mainly include the processes of major leak detection passed 41, battery cell evacuation 42, helium injection 43, helium detection 44, helium clearing 45, vacuum breaking 46, and major leak detection failed 47, as well as the actual time 48 and the designed time 49 of each action. The actions in major leak detection passed 41 may include opening the first vacuum valve 411, evacuating the first main detection chamber 412, performing the major leak detection 413, and closing the first vacuum valve 414. The designed time of the action of opening the first vacuum valve 411 is 0.25 seconds and the actual execution time is 0.25 seconds. The designed time of the action of evacuating the first main detection chamber 412 is 10 seconds and the actual execution time is 8 seconds. The designed time of the action of performing the major leak detection 413 is 5 seconds and the actual execution time is 3 seconds. The designed time of the action of closing the first vacuum valve 414 is 0.25 seconds, and the actual execution time is 0.25 seconds. The actions in battery cell evacuation 42 may include opening the second vacuum valve 421, opening the main valve 422, performing the evacuation of the battery cell 423, and closing the second vacuum valve 424. The designed time of the action of opening the second vacuum valve 421 is 0.25 seconds and the actual execution time is 0.25 seconds. The designed time of the action of opening the main valve 422 is 0.25 seconds and the actual execution time is 0.25 seconds. The designed time of the action of performing the evacuation of the battery cell 423 is 3 seconds, and the actual execution time ranges from 0.5 seconds to 3 seconds corresponding to different blueprints. The designed time of the action of closing the second vacuum valve 424 is 0.25 seconds and the actual execution time is 0.25 seconds. The actions in helium injection 43 may include opening the first helium injection valve 431, injecting helium 432, closing the first helium injection valve 433, and closing the main valve 434. The designed time of opening the first helium injection valve 431 is 0.25 seconds and the actual execution time is 0.25 seconds. The designed time of the action of injecting helium 432 is 3 seconds and the actual execution time is 1 second. The designed time of the action of closing the first helium injection valve 433 is 0.25 seconds and the actual execution time is 0.25 seconds. The designed time of the action of closing the main valve 434 is 0.25 seconds and the actual execution time is 0.25 seconds. The actions in helium detection 44 may include opening the helium detection valve 441, sending a helium detection request to the host computer 442, receiving a helium detection instruction 443, performing the helium detection 444, and closing the helium detection valve 445. The designed time of the action of opening the helium detection valve 441 is 0.25 seconds and the actual execution time is 0.25 seconds. The designed time of the action of sending a helium detection request to the host computer 442 is 0.25 seconds and the actual execution time is 0.25 seconds. The designed time of the action of receiving a helium detection instruction 443 is 0.25 seconds and the actual execution time is 0.25 seconds. The designed time of the action of performing the helium detection 444 is 5 seconds and the actual execution time is 5 seconds. The designed time of the action of closing the helium detection valve 445 is 0.25 seconds and the actual execution time is 0.25 seconds. The actions in helium clearing 45 may include opening the second vacuum valve 451, opening the main valve 452, performing the helium clearing of the battery cell 453, and closing the second vacuum valve 454. The designed time of the action of opening the second vacuum valve 451 is 0.25 seconds and the actual execution time is 0.25 seconds. The designed time of the action of opening the main valve 452 is 0.25 seconds and the actual execution time is 0.25 seconds. The designed time of the action of performing the helium clearing of the battery cell 453 is 3 seconds and the actual execution time ranges from 2 seconds to 3 seconds depending on different blueprints. The designed time of the action of closing the second vacuum valve 454 is 0.25 seconds and the actual execution time is 0.25 seconds. The actions of vacuum breaking 46 may include opening the battery cell vacuum breaking valve 461 and opening the chamber vacuum breaking valve 462. The designed time of the action of opening the battery cell vacuum breaking valve 461 is 0.25 seconds and the actual execution time is 0.25 seconds. The designed time of opening the chamber vacuum breaking valve 462 is 0.25 seconds and the actual execution time is 0.25 seconds. The actions of major leak detection failed 47 may include opening the first vacuum valve 471, evacuating the first main detection chamber 472, performing the major leak detection 473, closing the first vacuum valve 474, opening the chamber vacuum breaking valve 475, opening the battery cell vacuum breaking valve 476, and opening the main valve 477. The designed time of the action of opening the first vacuum valve 471 is 0.25 seconds and the actual execution time is 0.25 seconds. The designed time of the action of evacuating the first main detection chamber 472 is 10 seconds and the actual execution time is 8 seconds. The designed time of the action of performing the major leak detection 473 is 5 seconds and the actual execution time is 3 seconds. The designed time of the action of closing the first vacuum valve 474 is 0.25 seconds and the actual execution time is 0.25 seconds. The designed time of the action of opening the chamber vacuum breaking valve 475 is 0.25 seconds and the actual execution time is 0.25 seconds. The designed time of the action of opening the battery cell vacuum breaking valve 476 is 0.25 seconds and the actual execution time is 0.25 seconds. The designed time of the action of opening the main valve 477 is 0.25 seconds and the actual execution time is 0.25 seconds.

By way of example, based on the helium detection system and the helium detection method proposed in the embodiments of the present application, simulations are performed to obtain verification results shown in Tables 1 and 2 below:

**Table 1**

| Simulation duration (h) | Number of main detection chambers | Number of battery cells per chamber | Defective rate of incoming battery cells (%) | Number of battery cells detected per minute | Total production capacity | Number of defective cells |
|---|---|---|---|---|---|---|
| 22 | 4 | 4 | 1 | 23.7 | 24742 | 332 |
| 22 | 4 | 4 | 2 | 23.4 | 24733 | 635 |
| 22 | 4 | 4 | 3 | 22.9 | 24409 | 889 |
| 22 | 4 | 4 | 4 | 19.6 | 21154 | 1026 |

**Table 2**

| Configured name | Configured number | Note |
|---|---|---|
| Helium detector | 3 | 2 configured for main detection and 1 configured for re-detection |
| Main detection chamber | 4 | Simulated optimal solution |
| Number of battery cells in the main detection chamber | 4 | Simulated optimal solution |
| Handling manipulator | 3 | 1 configured for each of loading, unloading, and re-detection |

Table 1 shows the results of simulation verification. For example, the first simulation duration is 22 hours, the number of main detection chambers is 4, the number of battery cells in each main detection chamber is 4, the defective (NG) rate of incoming, i.e., loaded, battery cells is 1%, and the number of battery cells that can be detected per minute is 23.7. Therefore, the number of battery cells that can be detected in 22 hours is 24742, of which the number of defective battery cells is 332. Table 2 shows the conclusions obtained through simulation. The configuration of the helium detection system that can achieve the best detection effect and the highest detection efficiency is as follows: three helium detectors, of which two are configured at the main detection station and one is configured at the re-detection station; four main detection chambers are configured, and four battery cells are placed in each main detection chamber for detection, which is the optimal solution obtained by simulation; and three handling manipulators are configured, with one at each of the loading, unloading, and re-detection stations, that is, including a loading manipulator, an unloading manipulator, and a re-detection manipulator, thereby improving the utilization rate of vacuum and helium resources and achieving the best detection effect and the highest detection efficiency. In addition, the simulation is based on the actual first time yield (FTY) of the production line of 98%±1 and the design benchmark of the incoming material defective rate of 3%, without over-design; and it has been verified that in a case where the incoming material defective rate is greater than 3%, there is a particular impact on the equipment beat and production capacity in the helium detection system.

This embodiment provides a helium detection method. The control device of the helium detection system can control the loading manipulator to transfer the battery cell to any idle first main detection chamber among the multiple main detection chambers, and then open the first vacuum valve connected to the first vacuum pump, so that the first main detection chamber can be evacuated using the first vacuum pump, and after the evacuation is completed, close the first vacuum valve, and perform major leak detection on the battery cell, which can effectively reduce the waste of vacuum resources and improve the efficiency of the major leak detection. Then, the control device can, in a case where the major leak detection is passed, continue to control the second vacuum valve to open, and evacuate the battery cell using the second vacuum pump, and then control the first helium injection valve of the helium pipeline to open, to inject helium into the battery cell to complete the helium detection, and close the first helium injection valve, which can effectively reduce the waste of vacuum and helium resources during the helium detection process and improve the helium detection efficiency. It can be seen that the present application can improve the utilization rate of the vacuum and helium resources in the main detection procedure and effectively improve the detection efficiency of major leak detection and helium detection for battery cells by controlling and scheduling the action execution by related devices in the major leak process and helium detection process in the main detection procedure.

Those skilled in the art should understand that the embodiments of the present application may be provided as a method, a system, or a computer program product. Therefore, the present application may take the form of a hardware embodiment, a software embodiment, or an embodiment with a combination of software and hardware aspects.

Described above are merely preferred embodiments of the present application, which are not intended to limit the scope of the present application.

### Industrial applicability

The present application discloses a helium detection system and method. A control device controls a loading manipulator to transfer a battery cell to a first main detection chamber and open a corresponding first vacuum valve, evacuates the first main detection chamber through a first vacuum pump, closes the first vacuum valve after the evacuation is completed, and performs major leak detection on the battery cell through a first negative pressure gauge; in a case where the major leak detection is passed, controls a second vacuum valve to open, to start a second vacuum pump to evacuate the battery cell, and after the evacuation, controls a first helium injection valve of a helium pipeline to open, to inject helium into the battery cell, and closes the first helium injection valve after the helium injection is completed, and performs helium detection on the battery cell through a first helium detector, thereby completing the main detection for the battery cell; whereas in a case where the major leak detection is failed, opens a vacuum breaking valve, and breaks the vacuum of the battery cell and the first main detection chamber through an atmospheric pipeline; and controls an unloading manipulator to transfer the battery cell to a re-detection chamber for re-detection, thereby capable of improving the utilization rate of vacuum resources and helium resources and improving the detection efficiency.

## Claims

1. A helium detection system, comprising a control device, a loading manipulator, a main detection chamber, a first vacuum pump, a first vacuum valve, a second vacuum pump, a second vacuum valve, a first negative pressure gauge, a helium pipeline, a first helium injection valve, a first helium detector, an unloading manipulator, and a re-detection chamber;
the control device being configured to control the loading manipulator to transfer a battery cell to a first main detection chamber, and control the first vacuum valve corresponding to the first main detection chamber to open, and evacuate the first main detection chamber through the first vacuum pump; in a case where the evacuation of the first main detection chamber is completed, close the first vacuum valve, and perform major leak detection on the battery cell through the first negative pressure gauge; in a case where a detection result of the major leak detection is detection passed, control the second vacuum valve to open, to start the second vacuum pump to evacuate the battery cell; in a case where the evacuation of the battery cell is completed, control the first helium injection valve of the helium pipeline to open, to inject helium into the battery cell; and in a case where the helium injection is completed, close the first helium injection valve, and perform helium detection on the battery cell through the first helium detector, thereby completing a main detection operation on the battery cell;
the control device further being configured to, in a case where the detection result of the major leak detection is detection failed, control a vacuum breaking valve to open, and break the vacuum of the battery cell and the first main detection chamber through an atmospheric pipeline; and control the unloading manipulator to transfer the battery cell to the re-detection chamber for re-detection; wherein the re-detection includes re-detection for the major leak detection and re-detection for the helium detection;
wherein the first main detection chamber is any idle chamber among multiple main detection chambers; the first vacuum valve is connected to the first vacuum pump; and the second vacuum valve is connected to the second vacuum pump.

2. The helium detection system according to claim 1, further comprising a host computer and a helium detection valve, the helium detection valve being connected to the first helium detector;
wherein the control device is further configured to control the helium detection valve corresponding to the first helium detector to open, and send a helium detection request to the host computer;
the host computer is configured to send a helium detection instruction to the control device in response to the helium detection request; and
the control device is further configured to control the first helium detector to perform helium detection on the battery cell in response to the helium detection instruction; and in a case where the helium detection is completed, close the helium detection valve.

3. The helium detection system according to claim 2, further comprising a main valve;
wherein the control device is further configured to control the second vacuum valve and the main valve to open, to start the second vacuum pump to evacuate the battery cell; and in a case where the evacuation of the battery cell is completed, close the second vacuum valve; and
the control device is further configured to, in a case where the first helium injection valve is closed, close the main valve.

4. The helium detection system according to claim 3, further comprising the atmospheric pipeline and the vacuum breaking valve connected to the atmospheric pipeline;
wherein the control device is further configured to control the second vacuum valve and the main valve to open, and extract the helium from the battery cell using the second vacuum pump; in a case where helium clearing in the battery cell is completed, close the second vacuum valve; and control the vacuum breaking valve to open, and break the vacuum of the battery cell and the first main detection chamber through the atmospheric pipeline.

5. The helium detection system according to claim 4, further comprising a re-detection manipulator, a first buffer position, and a first unloading pull belt;
wherein the control device is further configured to, in a case where a re-detection result for the battery cell is re-detection passed, control the re-detection manipulator to transfer the battery cell from the re-detection chamber to the first buffer position; and control the unloading manipulator to transfer the battery cell from the first buffer position to the first unloading pull belt for unloading.

6. The helium detection system according to claim 5, further comprising an unloading position;
wherein the control device is configured to, in a case where a detection result of the helium detection is detection passed, transfer the battery cell from the first main detection chamber to the unloading position, and control the unloading manipulator to transfer the battery cell on the unloading position to the first unloading pull belt for unloading; and in a case where the detection result of the helium detection is detection failed, control the unloading manipulator to transfer the battery cell from the first main detection chamber to the re-detection chamber for re-detection.

7. The helium detection system according to claim 5 or 6, further comprising a second unloading pull belt;
wherein the control device is further configured to, in a case where the re-detection result for the battery cell is re-detection failed, control the re-detection manipulator to transfer the battery cell from the re-detection chamber to the second unloading pull belt for unloading.

8. The helium detection system according to any one of claims 1 to 7, further comprising a detection device and a loading pull belt; wherein the main detection chamber comprises an upper chamber and a lower chamber;
the detection device is configured to perform a Hipot test on the battery cell;
the control device is further configured to, upon receiving a Hipot test passed message sent by the detection device, control the loading manipulator to transfer the battery cell on the loading pull belt to the lower chamber of the first main detection chamber, and combine the upper chamber and the lower chamber of the first main detection chamber; and in a case where the combination of the chambers is completed, control the first vacuum valve to open, to complete the evacuation operation on the first main detection chamber.

9. The helium detection system according to claim 8, further comprising a third unloading pull belt;
wherein the control device is further configured to, upon receiving a Hipot test failed message sent by the detection device, control the loading manipulator to transfer the battery cell on the loading pull belt to the third unloading pull belt for unloading.

10. The helium detection system according to any one of claims 1 to 9, wherein
the control device is further configured to control the loading manipulator to transfer a first number of the battery cells from the loading pull belt to the first main detection chamber; and in a case where the number of the battery cells in the first main detection chamber reaches the first number, control the first vacuum valve to open, thereby completing the main detection operation on the first number of the battery cells.

11. A helium detection method applied to the helium detection system according to any one of claims 1 to 10, the method comprising:
a control device controlling a loading manipulator to transfer a battery cell to a first main detection chamber, and controlling a first vacuum valve corresponding to the first main detection chamber to open, and evacuating the first main detection chamber through a first vacuum pump; wherein the first main detection chamber is any idle chamber among multiple main detection chambers,and the first vacuum valve is connected to the first vacuum pump;
in a case where the evacuation of the first main detection chamber is completed, the control device closing the first vacuum valve, and performing major leak detection on the battery cell through a first negative pressure gauge;
in a case where a detection result of the major leak detection is detection passed, the control device controlling a second vacuum valve to open, to start a second vacuum pump to evacuate the battery cell; wherein the second vacuum valve is connected to the second vacuum pump;
in a case where the evacuation of the battery cell is completed, the control device controlling a first helium injection valve of a helium pipeline to open, to inject helium into the battery cell;
in a case where the helium injection is completed, the control device closing the first helium injection valve, and performing helium detection on the battery cell through a first helium detector, thereby completing a main detection operation on the battery cell;
in a case where a detection result of the major leak detection is detection failed, the control device controlling a vacuum breaking valve corresponding to an atmospheric pipeline to open, and breaking the vacuum of the battery cell and the first main detection chamber through the atmospheric pipeline; and
the control device controlling an unloading manipulator to transfer the battery cell to a re-detection chamber for re-detection; wherein the re-detection includes re-detection for the major leak detection and re-detection for the helium detection.

12. The helium detection method according to claim 11, wherein the performing helium detection on the battery cell through the first helium detector comprises:
the control device controlling a helium detection valve corresponding to the first helium detector to open, and sending a helium detection request to a host computer;
the host computer sending a helium detection instruction to the control device in response to the helium detection request;
the control device controlling the first helium detector to perform the helium detection on the battery cell in response to the helium detection instruction; and
in a case where the helium detection is completed, the control device closing the helium detection valve.

13. The helium detection method according to claim 12, further comprising:
the control device controlling the second vacuum valve and a main valve to open, to start the second vacuum pump to evacuate the battery cell; and
in a case where the evacuation of the battery cell is completed, the control device closing the second vacuum valve.

14. The method according to claim 13, wherein after in a case where the helium detection is completed, the control device closing the helium detection valve, the method further comprising:
the control device controlling the second vacuum valve and the main valve to open, and extracting the helium from the battery cell using the second vacuum pump;
in a case where helium clearing in the battery cell is completed, the control device closing the second vacuum valve; and
the control device controlling a vacuum breaking valve corresponding to the atmospheric pipeline to open, to break the vacuum of the battery cell and the first main detection chamber.

15. The helium detection method according to claim 14, wherein after the control device controlling the unloading manipulator to transfer the battery cell to the re-detection chamber for re-detection, the method further comprising:
in a case where a re-detection result for the battery cell is re-detection passed, the control device controlling a re-detection manipulator to transfer the battery cell from the re-detection chamber to a first buffer position; and
the control device controlling the unloading manipulator to transfer the battery cell from the first buffer position to a first unloading pull belt for unloading.

16. The helium detection method according to claim 15, wherein after the control device controlling the vacuum breaking valve corresponding to the atmosphere pipeline to open, to break the vacuum of the battery cell and the first main detection chamber, the method further comprising:
in a case where a detection result of the helium detection is detection passed, the control device transferring the battery cell from the first main detection chamber to an unloading position, and controlling the unloading manipulator to transfer the battery cell on the unloading position to the first unloading pull belt for unloading; and
in a case where the detection result of the helium detection is detection failed, the control device controlling the unloading manipulator to transfer the battery cell from the first main detection chamber to the re-detection chamber for re-detection.

17. The helium detection method according to claim 15 or 16, further comprising:
in a case where the re-detection result for the battery cell is re-detection failed, the control device controlling the re-detection manipulator to transfer the battery cell from the re-detection chamber to a second unloading pull belt for unloading.

18. The helium detection method according to any one of claims 11 to 17, further comprising:
upon receiving a Hipot test passed message sent by a detection device, the control device controlling the loading manipulator to transfer the battery cell on a loading pull belt to a lower chamber of the first main detection chamber, and combining an upper chamber and the lower chamber of the first main detection chamber; and
in a case where the combination of the chambers is completed, the control device controlling the first vacuum valve to open, to complete the evacuation operation on the first main detection chamber.

19. The helium detection method according to claim 18, further comprising:
upon receiving a Hipot test failed message sent by the detection device, the control device controlling the loading manipulator to transfer the battery cell on the loading pull belt to a third unloading pull belt for unloading.

20. The helium detection method according to any one of claims 12 to 19, further comprising:
the control device controlling the loading manipulator to transfer a first number of the battery cells from the loading pull belt to the first main detection chamber; and
in a case where the number of the battery cells in the first main detection chamber reaches the first number, the control device controlling the first vacuum valve to open, thereby completing the main detection operation on the first number of the battery cells.
